## Europäisches Patentamt
## European Patent Office
## Office européen des brevets

(19)

(11) Veröffentlichungsnummer: **0 082 985**
**B1**

(12) **EUROPÄISCHE PATENTSCHRIFT**

(45) Veröffentlichungstag der Patentschrift:
04.09.85

(51) Int. Cl.⁴: **C 09 C 1/00**

(21) Anmeldenummer: 82111170.5

(22) Anmeldetag: 02.12.82

(54) Perlglanzpigmente, Verfahren zu ihrer Herstellung und ihre Verwendung.

(30) Priorität: 24.12.81 DE 3151354

(43) Veröffentlichungstag der Anmeldung:
06.07.83 Patentblatt 83/27

(45) Bekanntmachung des Hinweises auf die Patenterteilung:
04.09.85 Patentblatt 85/36

(84) Benannte Vertragsstaaten:
BE CH DE FR GB IT LI NL

(56) Entgegenhaltungen:
FR - A - 2 072 300
FR - A - 2 193 859

**Die Akte enthält technische Angaben, die nach dem Eingang der Anmeldung eingereicht wurden und die nicht in dieser Patentschrift enthalten sind.**

(73) Patentinhaber: Merck Patent Gesellschaft mit beschränkter Haftung, Frankfurter Strasse 250, D-6100 Darmstadt (DE)

(72) Erfinder: Bernhard, Horst, Dr., Haus Nr. 52, A-4164 Schwarzenberg (AT)
Erfinder: Esselborn, Reiner, Dr., Küchlerstrasse 6, D-6100 Darmstadt (DE)

ACTORUM AG

## Beschreibung

Die Erfindung betrifft Perlglanzpigmente mit verbesserter Transparenz und Farbkraft auf der Basis von mit Metalloxiden beschichteten Glimmerschuppen.

Intensität und Reinheit der Interferenzfarbe dieser Pigmente hängt entscheidend von der Ausbildung der auf die Glimmerschuppen aufgefällten Metalloxidschicht ab. Neben einer homogenen Schichtdicke wird vor allem gefordert, dass die Schicht rissfrei ausgebildet ist und eine möglichst geringe Lichtstreuung aufweist. Es ist dabei bekannt, dass sowohl Risse, die insbesondere bei dickeren Schichten beim Glühen der Pigmente auftreten können, als auch insbesondere die Grösse der auf den Glimmer aufgefällten Metalloxidkristalle eine entscheidende Rolle für das Ausmass der Streuung spielen. Ebenfalls bekannt ist, dass die Streuung in der Schicht im betrachteten Bereich um so grösser ist, je grösser die Einzelkristalle des aufgefällten Metalloxids ausgebildet sind. Das an den Streuzentren in der Metalloxidschicht entstehende diffuse Licht mindert zum einen die Intensität im Glanzwinkel des reflektierten Lichtanteils und damit die Farbsättigung, zum anderen bewirkt es eine Verweisslichung der Interferenzfarbe. Bei zu grossen Kristallen verschwinden der Perlglanz und die Interferenzfarbe vollkommen.

Die nach den bekannten Fällverfahren hergestellten Pigmente, bei denen insbesondere $TiO_2$ als homogene Schicht auf Glimmerschuppen aufgefällt ist, sind in bezug auf Transparenz und Farbkraft noch nicht zufriedenstellend, so dass die Aufgabe bestand, in dieser Hinsicht verbesserte Pigmente zur Verfügung zu stellen.

Es wurde nun gefunden, dass überraschenderweise dann besonders vorteilhafte Pigmente entstehen, wenn die Fällung des $TiO_2$ in Gegenwart von Aluminiumionen vorgenommen wird und gleichzeitig noch $SiO_2$ mit ausgefällt wird, wodurch man Pigmente erhält, die eine homogene Mischschicht besitzen, in der neben $TiO_2$ noch $SiO_2$ und $Al_2O_3$ vorliegen.

In der FR-A Nr. 2193859 sind Pigmente beschrieben, bei denen auf plättchenförmigen Gipskristallen eine $TiO_2$-Schicht aufgefällt ist. Zur Erzielung einer glatten Oberfläche kann auf diese $TiO_2$-Schicht zusätzlich noch eine Schicht von $SiO_2$ oder von $Al_2O_3$ aufgefällt werden, wobei $Al_2O_3$ bei Rutiltypen und $SiO_2$ bei Anatastypen verwendet wird.

Eine gemeinsame Auffällung von $SiO_2$ und $Al_2O_3$ und eine Auffällung nicht als Oberflächenbeschichtung, sondern als homogene Mischschicht zusammen, mit dem $TiO_2$ ist dieser Publikation nicht zu entnehmen.

Gegenstand der Erfindung sind daher Perlglanzpigmente mit verbesserter Transparenz und Farbkraft auf der Basis von mit Metalloxiden beschichteten Glimmerschuppen, die dadurch gekennzeichnet sind, dass die Metalloxidschicht als homogene Mischschicht ausgebildet ist, in der neben Titandioxid noch Siliciumdioxid und Aluminiumoxid vorliegen.

Gegenstand der Erfindung ist weiterhin ein Verfahren zur Herstellung dieser Pigmente und ihre Verwendung.

Die erfindungsgemässen Pigmente weisen eine Reihe von Vorteilen auf. So ist durch die Verminderung von Streulicht die Transparenz und Farbkraft der Pigmente deutlich verbessert. Dies kann zumindest teilweise auf die Grösse der ausgefällten Metalloxidkristalle zurückzuführen sein, da elektronenmikroskopische Untersuchungen zeigen, dass bei den erfindungsgemässen Pigmenten diese Kristalle deutlich kleiner sind als bei üblichen Pigmenten. Es wird jedoch offenbar durch den erfindungsgemässen Zusatz von Aluminium- und Silicationen auch eine homogenere und stabilere Fällung erzielt, die sehr viel besser reproduzierbar ist als bei üblichen Fällverfahren. Beim Dispergieren der Pigmente in Wasser zeigt es sich, dass von der Pigmentoberfläche der neuen Pigmente sehr viel weniger $TiO_2$-Teilchen abgelöst und solubilisiert werden.

Bei der Herstellung der erfindungsgemässen Pigmente können die üblichen Verfahren Verwendung finden, wie z. B. das im DBP Nr. 2009566 beschriebene Verfahren. Dabei werden Glimmerschuppen, die in der Regel einen Durchmesser von etwa 5 bis 200 µm und eine Dicke von etwa 0,1 bis 5 µm besitzen, in einer wässerigen Lösung suspendiert, die mit einer geeigneten Säure, wie z. B. Salzsäure oder Schwefelsäure, auf einen pH-Wert von etwa 0,5 bis 5, insbesondere etwa 1,5 bis 2,5, gebracht wird. Zu dieser auf etwa 50 bis 100° C, vorzugsweise etwa 70 bis 80° C, erhitzten Suspension wird dann eine Titansalzlösung langsam zulaufen gelassen, wobei durch gleichzeitige Zugabe einer Base der pH-Wert der Suspension weitgehend konstant gehalten wird. Als Titansalz kann an sich jedes lösliche Titansalz verwendet werden. Bevorzugt werden $TiCl_4$ oder Titanylsulfat verwendet.

Nach dem erfindungsgemässen Verfahren wird die Fällung des Titandioxidaquats in Gegenwart von Aluminiumionen durchgeführt. Dabei ist es gleichgültig, ob die Aluminiumionen im Fällungsgefäss vorgelegt werden oder in der Titansalzlösung enthalten sind. Im Prinzip können alle Aluminiumsalze verwendet werden, die in den entsprechenden Titansalzlösungen löslich sind. Bevorzugt wird jeweils das Aluminiumsalz mit einem dem Titansalz entsprechenden Anion verwendet, also insbesondere Aluminiumchlorid oder Aluminiumsulfat. Der Zusatz von Aluminiumionen erfolgt in jedem Fall in der Weise, dass ein Gewichtsverhältnis von $TiCl_4$:$AlCl_3 \cdot 6H_2O$ von etwa 50:1 bis etwa 2:1, vorzugsweise etwa 30:1 bis etwa 5:1, eingehalten wird bzw. entsprechende Gewichtsverhältnisse beim Einsatz anderer Salze.

Das nach der vorliegenden Erfindung gleichzeitig mit auszufällende $SiO_2$ wird vorzugsweise der Base zugesetzt, die zur Aufrechterhaltung des pH-Wertes der Fällungsuspension gleichzeitig mit der sauren Titansalzlösung zudosiert wird. Als Base wird vorzugsweise eine Alkalilauge, insbesondere NaOH, verwendet, wobei das mit auszufällende Siliciumdioxid bevorzugt in Form eines löslichen Alkalisilicats, z. B. als Natriumsilicat, darin enthalten ist. Wird NaOH als Base verwendet, so wird in der Regel ein Gewichtsverhältnis von NaOH zu $SiO_2$ von 5:1 bis 400:1, vorzugsweise von 20:1 bis 200:1, eingehalten.

Die beiden Lösungen werden langsam so zugegeben, dass die in der Glimmersuspension durch Hydrolyse entstehenden Hydroxide bzw. Oxidaquate sich jeweils vollständig auf der Glimmeroberfläche abscheiden, ohne dass wesentliche Mengen von frei in der Suspension beweglichen Nebenprodukten entstehen. Die dabei zur Anwendung kommenden Zulaufgeschwindigkeiten sind so gewählt, dass pro Minute und pro Quadratmeter zu belegender Oberfläche etwa 0,01 bis 20 × $10^{-5}$ mol an auszufällenden Salzen zugeführt wird. Je nach der gewünschten Dicke der Beschichtung werden dabei Beschichtungszeiten von mehreren Stunden bis zu mehreren Tagen benötigt.

Nach Erreichen der gewünschten Schichtdicke bzw. der gewünschten Interferenzfarbe wird die Beschichtung beendet und die Pigmente werden analog den üblichen Verfahren abgetrennt, gewaschen, getrocknet und geglüht. Zum Glühen werden Temperaturen von etwa 500 bis 1000° C, insbesondere von 700 bis 1000° C angewendet, wobei die gefällten Metallhydroxide bzw. Oxidaquate entwässert werden und in die entsprechenden Oxide übergehen. In der Metalloxidschicht liegen Titan, Silicium und Aluminium in oxidischer Form und ggf. auch als Verbindung, wie z. B. als Aluminiumsilicat, in homogener Verteilung nebeneinander vor. Dabei hat das Silicium, berechnet als $SiO_2$ und bezogen auf die Metalloxidschicht, in der Regel einen Anteil von etwa 0,1 bis etwa 20 Gew.-%, vorzugsweise von etwa 1 bis etwa 10 Gew.-%, und das Aluminium, berechnet als $Al_2O_3$ und bezogen auf die Metalloxidschicht, einen Anteil von etwa 0,1 bis etwa 20 Gew.-%, vorzugsweise von etwa 0,2 bis etwa 10 Gew.-%. $SiO_2$ und $Al_2O_3$ bilden zusammen in der Regel 0,2 bis 30 Gew.-%, vorzugsweise etwa 2 bis 20 Gew.-% der Metalloxidschicht.

Durch Variation der Dicke der Beschichtung können beliebige Interferenzfarben erster oder höherer Ordnung erreicht werden. Auch bei sehr dikken Schichten, wie sie zur Herstellung von Pigmenten mit blauer oder grüner Interferenzfarbe benötigt werden, ist kaum eine Rissbildung, die zu einer Glanzverminderung führt, zu beobachten. Insgesamt zeigen die erfindungsgemässen Pigmente eine hohere Transparenz, weniger Streulicht und auf dunklem Untergrund eine grössere Farbkraft. Diese Vorteile treten bei Pigmenten aller Teilchengrössen auf, sind aber besonders signifikant bei solchen Teilchen zu beobachten, bei denen sich die Streuung in der Metalloxidschicht besonders störend bemerkbar macht, nämlich bei Pigmenten mit kleiner Teilchengrösse. So gelingt es nach dem erfindungsgemässen Verfahren, auch mit Glimmerteilchen unter 10 µm gute und farbkräftige Interferenzpigmente herzustellen.

Wegen der grösseren Stabilität der Pigmente beim Dispergieren in Wasser, bei dem weniger $TiO_2$-Teilchen von der Pigmentoberfläche abgelöst und solubilisiert werden, sind die neuen Pigmente auch insbesondere dort von Vorteil, wo eine weitere Behandlung in wässeriger Suspension oder eine Verarbeitung in wässerigem Medium erfolgen soll. Im übrigen können die erfindungsgemässen Pigmente wie die bisher bekannten verwendet werden, also z. B. zur Pigmentierung von Kunststoffen, Farben oder Lacken, aber insbesondere auch in Körperpflegemitteln und Kosmetika.

*Beispiel 1:*

Eine Suspension von 60 g Kaliglimmer der Kornfraktion 10 bis 70 µm in 2 l Wasser wird auf 75° C erhitzt und mit Salzsäure auf pH 2,2 eingestellt. Danach werden gleichzeitig eine Lösung, die 15 Gew.-% $TiCl_4$, 5 Gew.-% HCl und pro Liter 20 g $AlCl_3 \cdot 6 H_2O$ enthält, und eine Lösung, die 15 Gew.-% NaOH und pro Liter 3,3 g $SiO_2$ (als natriumsilicat) enthält, so zudosiert, dass der pH-Wert bei 2,2 konstant gehalten wird. Nach Erreichen der erwünschten blauen Interferenzfarbe wird die Beschichtung abgebrochen, das Pigment abfiltriert, bei 120° C getrocknet und 30 min bei 800° C geglüht.

Das Präparat besitzt eine kräftig blaue Interferenzfarbe und bei Betrachtung im Mikroskop ist zu erkennen, dass die Plättchenoberfläche glatt und ohne Risse ist. Der Vergleich eines Lackabstrichs des präparats mit dem eines üblichen Pigments zeigt die klare, brillante Interferenzfarbe, die gute Transparenz und die geringe Milchigkeit des neuen Pigments.

*Beispiel 2:*

Analog Beispiel 1 werden 60 g Kaliglimmer der Kornfraktion 10 bis 70 µm bis zum Erreichen einer grünen Interferenzfarbe beschichtet, danach abgetrennt, getrocknet und geglüht.

Auch hier zeigt der Vergleich mit einem handelsüblichen Präparat deutlich die Vorteile des neuen Pigments auf.

*Beispiel 3:*

Analog Beispiel 1 wird Kaliglimmer der Kornfraktion 10 µm beschichtet. Jeweils nach Erreichen einer goldenen, rotblauen und blauen Interferenzfarbe werden Pigmentproben entnommen, gewaschen, getrocknet und geglüht.

Die Lackabstriche der neuen Pigmente zeigen trotz der kleinen Korngrösse der Pigmente sehr gute Farbsättigung und Brillanz.

*Beispiel 4:*

Analog Beispiel 3 werden Pigmentproben verschiedener Interferenzfarben hergestellt, wobei jedoch ein Kaliglimmer der Kornfraktion von etwa 5 µm verwendet wird. Die Lackabstriche der neuen Pigmente zeigen, dass sogar mit dieser extrem feinen Korngrösse sehr gut brauchbare Interferenzpigmente erhalten werden.

## Patentansprüche

1. Perlglanzpigmente mit verbesserter Transparenz und Farbkraft auf der Basis von mit Metalloxiden beschichteten Glimmerschuppen, dadurch gekennzeichnet, dass die Metalloxidschicht als homogen Mischschicht ausgebildet ist, in der neben Titandioxid noch Siliciumdioxid und Aluminiumoxid vorliegen.

2. Perlglanzpigmente nach Anspruch 1, dadurch gekennzeichnet, dass der Gehalt des $SiO_2$ in der Metalloxidschicht etwa 0,1 bis etwa 20 Gew.-% und der Gehalt des $Al_2O_3$ in der Metalloxidschicht etwa 0,1 bis etwa 20 Gew.-% beträgt.

3. Verfahren zur Herstellung von perlglanzpigmenten mit verbesserter transparenz und Farbkraft auf der Basis von mit metalloxiden beschichteten Glimmerschuppen, wobei Glimmer in wässeriger Suspension mit einer Titandioxidaquatschicht belegt und danach gewaschen, getrocknet und geglüht wird, dadurch gekennzeichnet, dass zusammen mit dem Titandioxidaquat Siliciumdioxid und Aluminiumhydroxid als einheitliche Schicht aufgefällt wird.

4. Verfahren nach Anspruch 3, dadurch gekennzeichnet, dass Silicium und Aluminium in einer menge von etwa 0,2 bis etwa 30 Gew.-% bezogen auf die Metalloxidschicht und bezogen auf $SiO_2$ und $Al_2O_3$ mit ausgefällt wird.

5. Verwendung der Perlglanzpigmente nach Anspruch 1 zur Pigmentierung von Kunststoffen, lacken, farben und Körperpflegemitteln.

## Revendications

1. Pigments nacrés de transparence et de force colorante améliorée à base de paillettes de mica revêtues d'oxydes métalliques, caractérisés en ce que la couche d'oxydes métalliques est constituée comme une couche homogène mixte où se trouvent à côté du dioxyde de titane du dioxyde de silicium et de l'oxyde d'aluminium.

2. Pigments nacrés selon la revendication 1, caractérisés en ce que la teneur en $SiO_2$, dans la couche d'oxydes métalliques est comprise entre 0,1 et 20% en poids et la teneur de $Al_2O_3$ dans la couche d'oxyde métallique est comprise entre 0,1 et 20% en poids.

3. Procédé de préparation de pigments nacrés de transparence et de force colorante améliorée à base de paillettes de mica revêtues d'oxydes métalliques dans lequel le mica en suspension aqueuse est revêtu d'une couche de dioxyde de titane hydratisé et est ensuite lavé, séché et calciné, caractérisé en ce que en même temps que le dioxyde de titane hydratisé on précipite le dioxyde de silicium et l'hydroxyde d'aluminium en une couche homogène.

4. Procédé selon la revendication 3, caractérisé en ce que le silicium et l'aluminium sont coprécipités dans une quantité d'environ 0,2 à environ 30% en poids rapporté à la couche d'oxyde métallique et rapporté au $SiO_2$ et $Al_2O_3$.

5. Utilisation des pigments nacrés selon la revendication 1 pour la pigmentation de matières plastiques, encres, peintures et produits de soins du corps.

## Claims

1. Nacreous pigments having improved transparency and tinctorial strength and based on mica flakes coated with metal oxides, characterised in that the metal oxide layer is formed as a homogeneous mixed layer in which, in addition to titanium dioxide, also silicon dioxide and aluminium oxide are present.

2. Nacreous pigments according to Claim 1, characterised in that the content of $SiO_2$ in the metal oxide layer is about 0.1 to about 20% by weight and the content of $Al_2O_3$ in the metal oxide layer is about 0.1 to about 20% by weight.

3. Process for preparing nacreous pigments having improved transparency and tinctorial strength and based on mica flakes coated with metal oxides, the mica being coated in an aqueous suspension with a titanium dioxide hydrate layer and then washed, dried and calcined, characterised in that silicon dioxide and aluminium hydroxide are precipitated as a uniform layer together with the titanium dioxide hydrate.

4. Process according to Claim 3, characterised in that silicon and aluminium are co-precipitated in an amount of about 0.2 to about 30% by weight, relative to the metal oxide layer and relative to $SiO_2$ and $Al_2O_3$.

5. Use of nacreous pigments according to Claim 1, for pigmenting plastics, lacquers, paints and cosmetics.